# EUROPEAN PATENT SPECIFICATION

(11) **EP 1 142 848 B1**
(45) Date of publication and mention of the grant of the patent: **09.06.2004**
(21) Application number: 01102933.7
(22) Date of filing: 08.02.2001
(51) Int. Cl.: C04B 28/18, C04B 14/26

(54) **Calcium silicate board and method of manufacturing same**
Kalziumsilikatplatte und Verfahren zu ihrer Herstellung
Panneau à base de silicate de calcium et son procédé de fabrication

(30) Priority: 15.02.2000 JP 2000036466
(43) Date of publication of application: 10.10.2001
(73) Proprietor: Nichias Co., Ltd., Tokyo 105-8555 (JP)
(72) Inventor: Nakagawa, Shigeru, Hamamatsu-shi, Shizuoka (JP); Naruse, Seiichi, Hamamatsu-shi, Shizuoka (JP); Kanou, Takamaro, Hamamatsu-shi, Shizuoka (JP)
(74) Representative: Müller-Wolff, Thomas, Dipl.-Ing.

(56) References cited:
- EP-A- 0 207 920
- WO-A-92/00927
- DE-A- 3 633 471
- US-A- 3 001 882
- PATENT ABSTRACTS OF JAPAN vol. 1995, no. 02, 31 March 1995 (1995-03-31) & JP 06 305807 A (NICHIAS CORP), 1 November 1994 (1994-11-01)
- CHEMICAL ABSTRACTS, vol. 99, no. 18, 31 October 1983 (1983-10-31) Columbus, Ohio, US; abstract no. 145114u, KUBOTA LTD.: page 313; XP000188608 & JP 58 084153 A (ID.) 20 May 1983 (1983-05-20)

## Description

### Field of the Invention

The present invention relates to a calcium silicate board comprising a calcium silicate hydrate crystal matrix, anhydrous calcium (II) sulfate, reinforcing fibers, dolomite and wollastonite.

The invention further relates to a method of manufacturing a calcium silicate board, comprising the steps of: mixing water and a mixture containing calcium silicate raw materials, calcium sulfate dihydrate, reinforcing fibers, dolomite, and wollastonite; forming the mixture into a formed product by calendaring; autoclave-curing the formed product; and drying the cured product.

### Description of Background Art

Products comprising a calcium silicate crystal matrix have been widely used as building materials such as wall materials, ceilings and flooring materials.

From DE3633471 is known the principle to produce an autoclave-cured concrete product comprising a tobermorite (CSH) matrix, furthermore calcium sulfate and 1 to 20 wt % earth alcali carbonates like dolomite and magnesium carbonate.

A calcium silicate board is a plate-shaped product manufactured by forming a mixture of calcium silicate raw materials, fillers, reinforcing fibers, and the like using a paper-milling technique (calendering), dehydration press-forming, extrusion-forming, or the like. These calcium silicate boards exhibit high specific strength, are lightweight, and have stability with respect to heat.

However, calcium silicate boards generally contain about 10% of water due to high hygroscopicity. Because of this, steam bursts, destruction, cracks, partial delamination, and the like tend to occur during a fire due to sudden vaporization of water contained in the calcium silicate boards. Therefore, calcium silicate boards excelling in fire resistance and non-combustibility have been demanded. The fire resistance of the calcium silicate board is such that physical destruction such as steam bursts, destruction, cracks, and partial delamination does not occur, or occurs only to a small extent. For example, fire resistance is measured according to the evaluation methods prescribed in JIS A1304 and BS (British standard) 476 Parts 20 and 22. The non-combustibility of the calcium silicate board relates to heat conductivity through the calcium silicate board. For example, non-combustibility is measured according to the evaluation methods prescribed in JIS A1321 and BS 476 Part 4. As the heat conductivity is lower, non-combustibility is evaluated as superior.

As an invention relating to a method for improving the fire resistance of the calcium silicate board, the applicant of the present invention has proposed a method of manufacturing a calcium silicate formed article in Japanese Patent Application Laid-open No. 6-305807. This method uses calcium sulfate dihydrate as a raw material for forming a calcium silicate formed article. Calcium sulfate dihydrate shrinks when converted to anhydrous calcium sulfate (II) during autoclave-curing, thereby forming minute pores in the calcium silicate formed article.

Accordingly, an object of the present invention is to provide a calcium silicate board excelling in fire resistance with an aeration rate of 1.5 x 10⁻⁵ ml·cm/sec·cm²·cm H₂O or more and excelling in non-combustibility, and a method of manufacturing the same.

### SUMMARY OF THE INVENTION

The present inventors have conducted extensive studies in view of the above situation. As a result, the present inventors have found that a calcium silicate board containing the features of claim 1 will decompose at 700 to 850°C and can prevent the temperature inside the calcium silicate board from rising. This is because the endothermic reaction of the carbonate substance occurs during a fire due to decarboxylation, whereby a calcium silicate board excelling in non-combustibility can be obtained.

Additionally the present inventors discovered that minute pores formed in calcium silicate article increases the aeration rate to 1,5 x 10⁻⁵ ml cm/sec cm² H₂O or more, whereby a calcium silicate formed article excelling in explosion resistance (fire resistance) is obtained.

The present invention also provides a method of manufacturing a calcium silicate board, comprising the steps of mixing water and a mixture containing calcium silicate raw materials, calcium sulfate dihydrate, reinforcing fibers, dolomite and wollastonite ; forming the mixture into a formed product by calendering, autoclave-curing the formed product, and drying the cured product, wherein the content of the calcium sulfate dihydrate, the dolomite and the wollastonite is 12 to 45 wt% and 5 to 30 wt% and 5 to 30 wt%, respectively.

### BRIEF DESCRIPTION OF THE DRAWINGS

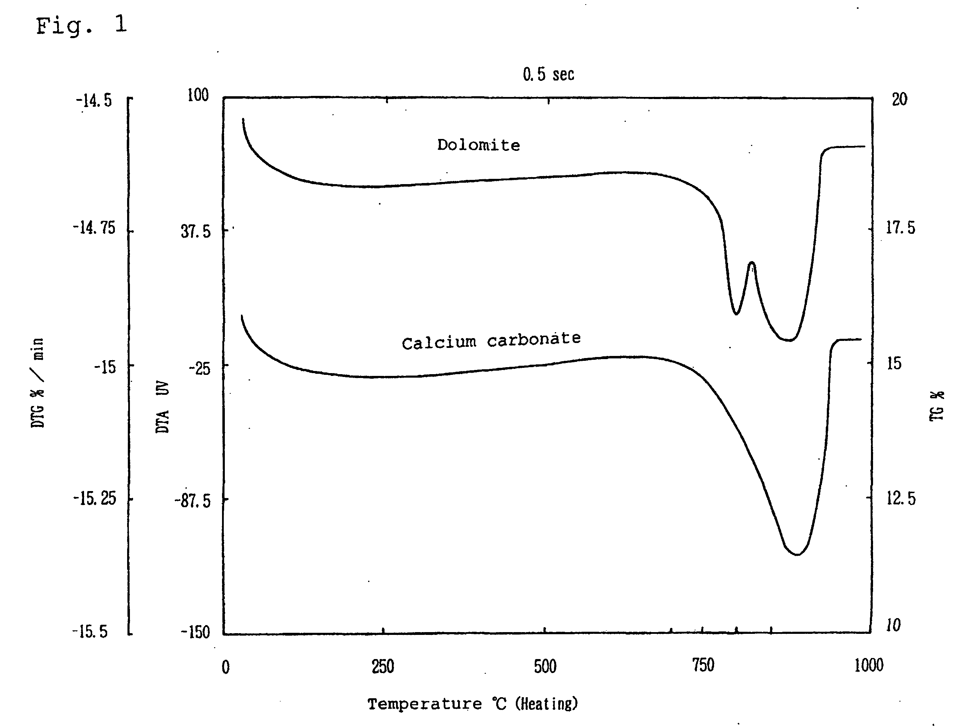

Figure 1 shows an example of DTA results for dolomite and calcium carbonate.

### DETAILED DESCRIPTION OF THE INVENTION AND PREFERRED EMBODIMENTS

The calcium silicate board according to the present invention comprises a calcium silicate hydrate crystal matrix, anhydrous calcium sulfate (II), reinforcing fibers, dolomite, and wollastonite. The dolomite content is 5 to 30 wt%. The calcium silicate board is manufactured by a method according to claim 3. The calcium silicate board according to the present invention will be described below in accordance with an example of the manufacturing method thereof.

The calcium silicate raw materials used in the present invention form a calcium silicate hydrate crystal matrix by autoclave-curing and mainly consist of silicic acid raw materials and lime raw materials. The silicic acid raw materials supply SiO₂ components. As examples of the silicic acid raw materials, silica rock, diatomaceous earth, iron-blast-furnace slag, fly ash, and the like canbe given. Of these, the use of silica rock is preferable. Use of silica rock ensures that calcium sulfate dihydrate is easily dehydrated and converted to anhydrous calcium sulfate (II). Individual use of diatomaceous earth tends to inhibit formation of anhydrous calcium sulfate (II). It is preferable to use diatomaceous earth in combination with silica rock in order to prevent such a disadvantage. The lime raw materials supply CaO components. As examples of the lime raw materials, calcium hydroxide, calcium oxide, portland cement, and the like can be given.

Calcium sulfate dihydrate (CaSO₄·2H₂O) is dehydrated during autoclave-curing to form anhydrous calcium sulfate (II) (CaSO₄) through calcium sulfate hemihydrate (CaSO₄·0.5H₂O) and anhydrous calcium sulfate (III). As calcium sulfate dihydrate, calcium sulfate dihydrate in the form of either needle-shaped crystals or amorphous powder may be used. Of these, it is preferable to use calcium sulfate dihydrate in the form of needle-shaped crystals. Needle-shaped crystal calcium sulfate dihydrate shrinks during autoclave-curing to form needle-shaped crystal anhydrous calcium sulfate (II), thereby forming slender pores by linking one another. This increases the aeration rate of the calcium silicate board. Moreover, heat shrinkage of the calcium silicate matrix can be reduced due to the needle-shaped crystal form.

Reinforcing fibers provide mechanical strength to the calcium silicate board. There are no specific limitations to the type of reinforcing fibers. For examples, pulp, alkali-resistant glass fibers, carbon fibers, and organic synthetic fibers such as polypropylene fibers and aramid fibers can be given. Of these, use of pulp is preferable because pulp is economical.

The dolomite absorbs heat by decarboxylation at 700 to 850°C, and preferably 750 to 850°C, thereby providing non-combustibility to the calcium silicate board during a fire. Dolomite is generally represented by CaCO₃·MgCO₃, although the composition varies depending on the production area. Dolomite exhibits superior endothermic effects owing to two endothermic reaction peaks, including a peak at about 790°C resulting from decarboxylation of MgCO₃, and a peak at about 870°C resulting from decarboxylation of CaCO₃. The endothermic reaction peaks are measured by DTA (Differential Thermal Analysis). Figure 1 shows an example of DTA results for dolomite. In Figure 1, dolomite exhibits two endothermic reaction peaks at about 790°C and at about 870°C. The entire endothermic reaction caused by decomposition with a peak at about 790°C occurs within the temperature range of 700 to 850°C. The starting point of the endothermic reaction caused by decomposition with a peak at about 870°C is within the temperature range of 700 to 850°C. Specifically, dolomite decomposes at 700 to 850°C, thereby causing a sufficient endothermic reaction to occur.

It is preferable to use dolomite containing a sufficient amount of MgCO₃ components in order to ensure that a sufficient endothermic reaction occurs at 700 to 850°C. It is particularly preferable to use dolomite having an MgO analysis value (reduced value of MgCO₃) of 13 wt% or more, and preferably 17 wt% or more. Such dolomite causes a sufficient endothermic reaction to occur, thereby increasing non-combustibility of the calcium silicate board.

The average particle diameter of the dolomite is preferably 10 to 100 µm, and still more preferably 10 to 60 µm. The average particle diameter used herein refers to a median diameter (particle diameter at 50% in accumulated volume distribution). If the average particle diameter is less than 10 µm, the carbonate substance may not be sufficiently collected using a calendering machine at the time of calendering, whereby non-combustibility of the resulting calcium silicate board may decrease. Moreover, this may decrease yield of the product per raw materials. If the average particle diameter exceeds 100 µm, formation of the calcium silicate hydrate crystal matrix from the calcium silicate raw materials may be hindered during autoclave-curing. This causes defects to occur in the matrix, whereby the bending strength of the calcium silicate board may decrease. Calcium carbonate is known as a carbonate substance which decomposes at a high temperature. However, calcium carbonate decomposes at a relatively high temperature (about 900°C) as shown in Figure 1, thereby providing insufficient non-combustibility.

In addition to the above raw materials, a filler e.g. wollastonite (CaSO₃) is used in the raw materials. Alternatively talc, mica, pearlite, and vermiculite can be used as the raw material for the calcium silicate board of the present invention, as required. Of these, use of wollastonite, talc, and pearlite is preferable for the following reasons. Specifically, wollastonite decreases the firing shrinkage rate. Talc improves the surface properties and construction capability (nailing characteristics) of the calcium silicate board. Use of pearlite leads to reduction of weight.

When manufacturing the calcium silicate board of the present invention using the above raw materials, a mixture containing the calcium silicate raw materials, calcium sulfate dihydrate, reinforcing fibers, dolomite and wollastonite is prepared. The proportion of calcium sulfate dihydrate in the mixture is adjusted so that the proportion of anhydrous calcium sulfate (II) in the resulting calcium silicate board is 10 to 35 wt%, and preferably 20 to 30 wt%. Specifically, the proportion of calcium sulfate dihydrate is 12 to 45 wt%, and preferably 25 to 38 wt%. If the proportion is less than 12 wt%, the aeration rate of the resulting calcium silicate board becomes less than 1.5 × 10⁻⁵ ml·cm/sec·cm²·cm H₂O, whereby fire resistance may decrease. If the proportion exceeds 45 wt%, bending strength of the resulting calcium silicate board may decrease.

The proportion of the dolomite in the mixture is 5 to 30 wt%, and preferably 10 to 20 wt%. If the proportion is less than 5 wt%, non-combustibility of the resulting calcium silicate board may decrease. If the proportion exceeds 30 wt%, bending strength of the resulting calcium silicate board may decrease. The proportion of raw materials other than calcium sulfate dihydrate and dolomite may be appropriately determined.

The proportion of wollastonite added to the mixture is 5 to 30 wt%, and preferably 10 to 25 wt%. If the proportion is less than 5 wt%, the effect of the additionmaybe insufficient. If the proportion exceeds 30 wt%, the strength of the resulting calcium silicate board may decrease. In particular, the addition of wollastonite as a filler in the above range reduces the firing shrinkage rate.

After the addition of water and the like, the mixture is formed into a green sheet (raw board) by calendering or the like. As the calendering method, a method using a cylinder calendering machine and the like can be given. The green sheet is then autoclave-cured while applying pressure to form a calcium silicate hydrate crystal matrix from the calcium silicate raw materials. At the same time, anhydrous calcium sulfate (II) is formed by dehydration of calcium sulfate dihydrate. Autoclave-curing is carried out at a temperature of 164 to 200°C, and preferably 179 to 183°C, and a pressure of 588399 to 1470997.5 N/m² (6 to 15 kgf/cm²), and preferably 882598.5 to 980665 N/m² (9 to 10 kgf/cm²), for a retention time of 3 to 20 hours, and preferably 8 to 12 hours. After autoclave-curing, the cured product is appropriately dried to obtain a calcium silicate board.

The calcium silicate board of the present invention obtained using the above method or the like comprises a calcium silicate hydrate crystal matrix, anhydrous calcium sulfate (II), reinforcing fibers, and dolomite. The content of dolomite is 5 to 30 wt%. The calcium silicate hydrate crystal matrix is a substrate containing calcium silicate crystals as a major component, which is formed from the calcium silicate raw materials by autoclave-curing as described above.

Anhydrous calcium sulfate (II) is formed by the dehydration of calcium sulfate dihydrate. The content of anhydrous calcium sulfate (II) in the calcium silicate board is 10 to 35 wt%, and preferably 20 to 30 wt%. If the content of anhydrous calcium sulfate (II) is less than 10 wt%, the aeration rate may decrease. If the content exceeds 35 wt%, the bending strength of the resulting calcium silicate board may decrease.

Reinforcing fibers and the dolomite not substantially react with the calcium silicate raw materials, which are allowed to remain in the calcium silicate board. The content of dolomite in the calcium silicate board is 5 to 30 wt%, and preferably 10 to 20 wt%. If the content of the carbonate substance is less than 5 wt%, non-combustibility of the calcium silicate board may decrease. If the content exceeds 30 wt%, bending strength of the calcium silicate board may decrease.

Fillers included in the calcium silicate board of the present invention do not substantially react with the calcium silicate raw materials, which are allowed to remain in the calcium silicate board. The content of wollastonite as filler in the calcium silicate board is 5 to 30 wt%, and preferably 10 to 25 wt%. If the content is less than 5 wt%, the effect of addition may be insufficient. If the content exceeds 30 wt%, the strength of the resulting calcium silicate board may decrease. In particular, the addition of wollastonite as a filler in the above range reduces the firing shrinkage rate.

Bending strength of the calcium silicate board of the present invention is 9806650 N/m² (100 kgf/cm²) or more, preferably 11767980 N/m² (120 kgf/cm²) or more, and still more preferably 11767980 to 19613300 N/m² (120 to 200 kgf/cm²). The aeration rate of the calcium silicate board measured according to BS 1902 Part 1A is 1.5 × 10⁻⁵ ml·cm/sec·cm²·cm H₂O or more, and preferably 2.0 × 10⁻⁵ ml·cm/sec·cm²·cm H₂O or more. The heat linear shrinkage rate of the calcium silicate board is within the range of ±2.0%, and preferably ±1.8%. The calcium silicate board does not cause steam bursts or cracks to occur in the fire resistance test according to BS 476 Part 22. In the non-combustibility test according to BS 476 Part 4, rise in temperature at the center of the test specimen and inside the furnace is respectively less than 50°C. The calcium silicate boards according to the present invention can be used as building materials such as wall materials, ceiling materials, and flooring materials, and the like.

### EXAMPLES

The present invention will be described in more detail by examples, which should not be construed as limiting the present invention.

### Example 1

36 parts by weight of calcium silicate matrix raw materials (silica rock: 8 parts by weight, diatomaceous earth: 7 parts by weight, calcium hydroxide: 18 parts by weight, portland cement: 3 parts by weight), 24 parts by weight of wollastonite, 32 parts by weight of calcium sulfate dihydrate, 5 parts by weight of pulp, and 10 parts by weight of dolomite were mixed according to the composition of the raw materials shown in Table 1. The mixture was calendered using a cylinder calendering machine according to a conventional method to obtain a green sheet (raw board) with a thickness of 9 mm having the above composition. The green sheet was autoclave-cured at a temperature of 179°C and a pressure of 882598.5 N/m² (9 kgf/cm²) for a retention time of 11 hours, and then dried using a hot blast at 120 to 140°C to obtain a calcium silicate board. The composition of the resulting calcium silicate board is shown in Table 2.

Bulk density, bending strength, aeration rate, and heat linear shrinkage rate of the resulting calcium silicate board were measured. Fire resistance and non-combustibility were evaluated. The aeration rate was measured according to BS 1902 Part 1A. Fire resistance and non-combustibility were evaluated according to BS 476 Part 22 and BS 476 Part 4, respectively. Bending strength and heat shrinkage rate were measured as follows.
Bending strength:
   Load was applied to the calcium silicate board vertically to the orientation direction of the reinforcing fiber (pulp). The bending strength was determined by dividing the stress at a point where the calcium silicate board broke by the cross section of the calcium silicate board.
Heat linear shrinkage rate:
   The calcium silicate board was heated at 1000°C for 3 hours, and then cooled to room temperature. The dimensional change during the heating was measured.

The evaluation results are shown in Table 3.

**TABLE 1**

| Composition of raw materials | Example | | | Comparative Example | | Reference Example |
|---|---|---|---|---|---|---|
| | 1 | 2 | 3 | 1 | 2 | 1 |
| Calcium silicate raw materials | | | | | | |
| Silica rock | 8 | 8 | 8 | 16 | 20 | 8 |
| Diatomaceous earth | 7 | 6 | 6 | 7 | 8 | 6 |
| Calcium hydroxide | 18 | 17 | 17 | 26 | 26 | 17 |
| Portland cement | 3 | 3 | 3 | 3 | 4 | 3 |
| Wollastonite | 24 | 23 | 23 | 13 | 19 | 23 |
| Calcium sulphate dihydrate | 32 | 25 | 25 | 38 | 0 | 25 |
| Pulp*¹ | 5 | 5 | 5 | 5 | 5 | 5 |
| Dolomite*² | 10 | 18 | - | - | - | - |
| Dolomite*³ | - | - | 18 | - | - | - |
| Calcium carbonate*⁴ | - | - | - | - | 18 | 18 |
| Total | 107 | 105 | 105 | 108 | 100 | 105 |
| * The unit used in Table 1 is "part(s) by weight". | | | | | | |

| | | | | | | |
|---|---|---|---|---|---|---|
| *¹ Pulp which was beaten until the amount of water drained was 300 ml according to JIS P8121 "Canadian standard freeness test" was used. | | | | | | |
| *² Average particle diameter (median diameter): 50 µm, MgO content: 18 wt% | | | | | | |
| *³ Average particle diameter (median diameter): 15 µm, MgO content: 14 wt% | | | | | | |
| *⁴ Average particle diameter (median diameter): 15 µm | | | | | | |

**TABLE 2**

| Composition of calcium silicate board | Example | | | Comparative Example | | Reference Example |
|---|---|---|---|---|---|---|
| | 1 | 2 | 3 | 1 | 2 | 1 |
| Calcium silicate hydrate crystal matrix | 36 | 34 | 34 | 52 | 58 | 34 |
| Wollastonite | 24 | 23 | 23 | 13 | 19 | 23 |
| Anhydrous calcium sulphate (II) | 25 | 20 | 20 | 30 | 0 | 20 |
| Pulp | 5 | 5 | 5 | 5 | 5 | 5 |
| Dolomite | 10 | 18 | 18 | - | - | - |
| Calcium carbonate | - | - | - | - | 18 | 18 |
| Total | 100 | 100 | 100 | 100 | 100 | 100 |
| * The unit used in Table 2 is "part(s) by weight". | | | | | | |

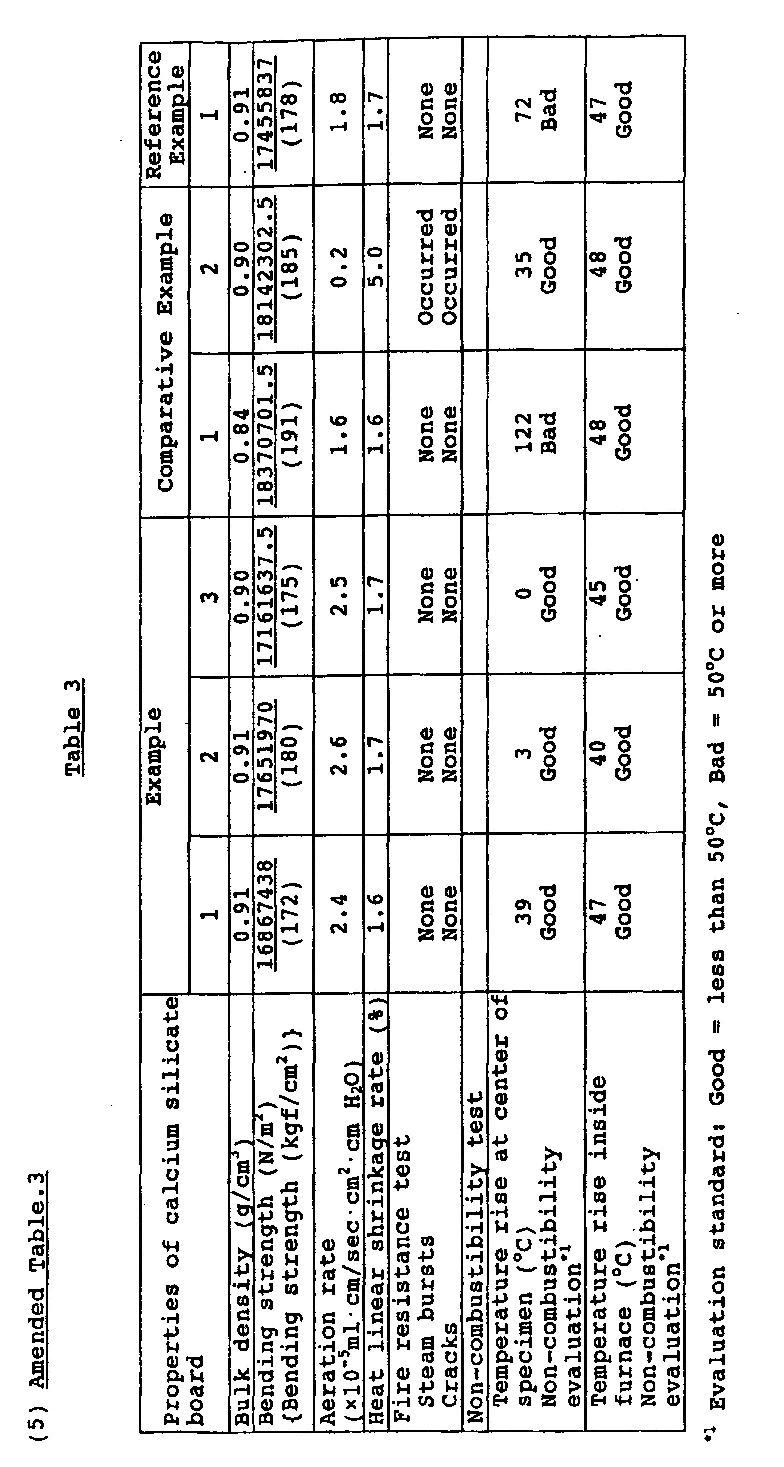

### Examples 2 and 3, Comparative Examples 1 and 2, and Referance Example 1

A calcium silicate board was obtained in the same manner as in Example 1 except for changing the composition of the raw materials as shown in Table 1. The composition of the resulting calcium silicate board is shown in Table 2. The calcium silicate board was evaluated in the same manner as in Example 1. The evaluation results are shown in Table 3.

According to the present invention, a calcium silicate board excelling in fire resistance with an aeration rate of 1.5 × 10⁻⁵ ml·cm/sec·cm²·cm H₂O or more and excelling in non-combustibility can be obtained.

## Claims

1. A calcium silicate board comprising a calcium silicate hydrate crystal matrix, anhydrous calcium (II) sulfate, reinforcing fibers, dolomite and wollastonite, wherein the content of the calcium sulfate dihydrate, the dolomite and the wollastonite is 12 to 45 wt-%, 5 to 30 wt-% and 5 to 30 wt-% respectively,
the calcium silicate board having an aeration rate of 1,5 x 10⁻⁵ ml cm/sec cm² cm H₂O or more, bending strength of 9806650 N/m² (100 kgf/cm²) or more, and a heat linear shrinkage rate within the range of ± 2.0 %.

2. A calcium silicate board according to claim 1, wherein the dolomite has an average particle diameter of 10 to 100 µm.

3. A method of manufacturing a calcium silicate board, according to claim 1 comprising the steps of mixing water and a mixture containing calcium silicate raw materials, calcium sulfate dihydrate, reinforcing fibers, dolomite, and wollastonite, calendering the mixture into a formed product, autoclave-curing the formed product and drying the cured product.

## Patentansprüche

1. Calciumsilikatplatte, die eine Calciumsilikathydrat-Kristallmatrix aufweist mit entwässertem Calcium (II) Sulfaten, Verstärkungsfasern, Dolomit und Wollastonit, wobei der Gehalt an Calciumsulfatdihydraten 12 - 45 GW-%, an Dolomit 5 - 30 GW-% und an Wollastonit 5 - 30 GW-% beträgt
und wobei die Calciumsilikatplatte eine Auflockerung von 1,5 x 10⁻⁵ ml cm/sec cm² cm H₂O oder mehr aufweist, eine Biegefestigkeit von 9806650 N/m² (100 kgf/cm²) oder mehr und eine lineare Wärmeschrumpfung im Bereich von ± 2.0 % aufweist.

2. Calciumsilikatplatte nach Anspruch 1, wobei der Dolomit einen durchschnittlichen Partikeldurchmesser von 10 bis 100 µm aufweist.

3. Verfahren zur Herstellung einer Calciumsilikatplatte nach Anspruch 1 umfassend das Mischen von Wasser und eine Mischung, enthalten Calciumsilikat-Rohmaterialien, Calciumsulfatdihydrat, Verstärkungsfasern, Dolomit und Wollastonit, Walzen und Überführen der Mischung in ein geformtes Produkt, Autoklav-Nachbehandlung des geformten Produktes und Trocknung des nachbehandelten Produktes.

## Revendications

1. Une carte en silicate de silicium comprenant une matrice de cristal de hydrate de silicate de calcium, de sulfate de calcium anhydre (II), des fibres de renforcement, de la dolomite et de la wollastonite, où le contenu en sulfate de calcium, dolomite et wollastonite est respectivement entre 12 et 45 % en poids, 5 et 30 % en poids et 5 et 30 % en poids , la carte en silicate de calcium ayant un taux d'aération de 1,5 x 10⁻⁵ ml cm/ cm cm² cm H₂O ou plus, une résistance à la flexion de 9806650 N/m² (100 kgf/cm²) ou plus, et un taux de rétrécissement linéaire thermique dans la zone de +/- 2.0 %.

2. Une carte en silicate de silicium selon la revendication 1, où la dolomite a un diamètre de particule moyen de 10 à 100 µm.

3. Un procédé de fabrication d'une carte en silicate de calcium selon la revendication 1 comprenant les étapes pour mélanger l'eau et un mélange contenant des matériaux de silicate de calcium bruts, de sulfate de calcium, des fibres de renforcement, de la dolomite et de la wollastonite, un calandrage du mélange dans un produit formé, maturation du produit formé dans un autoclave et le séchage du produit maturé.
